# EUROPEAN PATENT APPLICATION

(11) **EP 3 640 608 A1**
(43) Date of publication of application: **22.04.2020**
(21) Application number: 19460026.8
(22) Date of filing: 20.05.2019
(51) Int. Cl.: G01F 23/296, G01B 17/06

(54) **A METHOD AND AN ULTRA-SOUND DEVICE FOR A WAVE PROFILE MEASUREMENT IN REAL TIME ON THE SURFACE OF LIQUID, PARTICULARLY IN A MODEL BASIN**

(30) Priority: 16.10.2018 PL 42743518
(71) Applicant: Centrum Techniki Okretowej S.A., 80-392 Gdansk (PL)
(72) Inventor: Drzewiecki, Marcin, 81-850 Sopot (PL)

(57) **Abstract**

A method of wave profile measurements in real time on a liquid surface, particularly in a model basin, including placement of an ultra-sound probe above the liquid surface and a measurement of time required for the ultra-sound signal to cover the distance from the probe generator to the measurement point specified on the surface of the liquid and back to the absorbing element of the probe, followed by recording the results of the measurements and re-creation of the wave profile within a two-dimensional space as a time profile of distance from the measurement point determined by the probe, with at least two ultra-sound probes placed along an axis parallel to the direction of wave propagation above the tested liquid surface, at a mutual distance not greater than the minimum width of the detection area of a single probe, and the received signal is processed in an amplifiers and comparators circuit, a multiplexer circuit and in a sample- and-hold circuit, generating the output signal the voltage of which corresponds to the height of a momentary deformation of the free surface, correlated with the distance between the ultra-sound probe and the tested surface, whilst the voltage profile corresponds to the wave profile measured on the liquid surface, with the last voltage signal with a value within a pre-set, permitted value range set as a function of the accepted sensitivity is used as the output signal, and the signal received from the probe with the smallest distance from the measurement point on the surface of the tested liquid at the time of the measurement receives the highest priority. A device executing the method according to the invention, including a transmitting-receiving ultra-sound probe connected to a processing device, which includes at least one receiving ultra-sound probe (S1, S3) located near the transmitting-receiving ultrasound probe (S2) and at a distance not greater than the minimum width of the detection area of a single probe, while the processing device (9) is equipped with an amplifiers and comparators circuit (1), connected to a multiplexer circuit (2), a comparator circuit (3) and a sample- and-hold circuit (4) and to the device output (5).

## Description

The subject of the invention is a method of a wave profile measurement in real time on the surface of liquid, particularly in a model basin and an ultra-sound device for measurements of a wave profile in real time on the surface of liquid, particularly in a model basin intended to be used i.e. in hydromechanics laboratories for measurement of water wave profiles, that are generated in order to modelling of environmental conditions in a variable scale, related to waves propagated on the basin surface.

Polish patent disclosure PL162799 presents and ultra-sound device intended for distance measurements, including an electric vibration generator with a power amplifier, a piezoelectric, ultra-sound transmitting transducer, a piezoelectric receiving transducer, a filter-amplifier system, a comparator, a control system, a cycle generator, a sample-and-hold circuit a regulator and a delaying unit, the function of which is to block reception of other, weaker reflections of the measurement signal such that the measurement signal with maximum power is received.

Polish application document P.290040 discloses a sensor provided with an ultra-sound transmitter and receiver, in which the ultra-sound transmitting transducer and the ultra-sound receiving transducer are placed next to each other in a depression, within a common, aerodynamic housing. The transmission and reception characteristics of the transducers overlap and form a stationary ultrasonic radiation field within the open space in front of the depression, oriented towards the bottom of the basin. The ultra-sound transmitting transducer and the ultra-sound receiving transducer are installed in a common depression of the aerodynamic housing, inside absorbing shields. The sensor is intended for operation in underground excavations of methane mines or within other premises exposed to the explosion hazard caused by vapours and liquids.

The publication by Jarosz A., ed. Grygorowicz M. "Wytwarzanie i pomiar fali wodnej w basenie modelowym" [Politechnika Gdańska "Ćwiczenia laboratoryjne z hydromechaniki okr 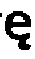 tu", Gdańsk 1989] describes a method and a testing station for measurements of wave profile as a function of time, which is recorded by a computer using a resistive probe, a signal-matching device processing the measured change in electric resistance to a standard ±10V voltage signal, and a wireless modem sending the measurement signal to the computer. The option of wave measurements using an ultra-sound probe was indicated, in which the recorded ultra-sound signal traverses a path from the transmitter located above the water and returns to a microphone placed next to the transmitter after being reflected off the water surface. This travel time is proportional to the distance, which is a function of the wave height.

Commonly used, single ultra-sound probes, used i.e. in liquid level measurements, have a detection area defined within a three-dimensional space and the measurement takes place using an ultra-sound signal generated by the probe, propagating and eventually being reflected at the liquid surface. The reflected signal is absorbed by the probe, which measures the time required to absorb the generated signal at the known speed of sound in the given medium, enabling determination of the distance covered by the ultra-sound signal. Single ultra-sound probes may not be used in wave profile measurements on the surface of liquids, for which the slope of the measured profile of waves on the liquid causes the generated ultra-sound signal to be reflected from the liquid at such an angle that the reflected ultra-sound signal leaves the detection area of the ultra-sound probe and may no longer reach its absorbing element.

The intention behind the invention is to develop a contactless measurement method for measurements of water wave profiles, particularly in a reduced scale, in a model environment, where the waves are steeper than in natural basins, and every small measurement interference significantly influences the correctness of forecasts describing the course of phenomena in the actual scale, wherein the intended use of the invention does not comprise the full scope of its use.

The method of wave measurements in real time on a liquid surface, particularly in a model basin, including placement of an ultra-sound probe above the liquid surface and a measurement of time required for the ultra-sound signal to cover the distance between the probe generator and the measurement point defined on the liquid surface and back to the absorbing element of the probe, followed by recording the results of these measurements and re-creating the wave profile within a two-dimensional space as a time dependence of distances from the measurement point determined by the probe according to the invention is characterised in that at least two ultra-sound probes are placed above the tested liquid surface, along the axis parallel to the direction of wave propagation, at a mutual distance not greater than the minimum width of the detection area of an individual probe. The received signal is processed in an amplifiers and comparators circuit, a multiplexer circuit and in a sample-and-hold circuit, generating the output signal, the voltage of which corresponds to the level of momentary deformation of the free surface, correlated to the distance between the ultra-sound probe and the tested surface. As a consequence, the voltage profile corresponds to the wave profile on the liquid surface. The last signal with a voltage value in the pre-set, permitted value range determined as a function of the accepted sensitivity is used as the output signal. The signal received from the probe, with the smallest distance of the measurement point on the liquid surface at the time of the measurement receives the highest priority.

A device for measurements of wave profile on liquid surfaces in real time, particularly in a model basin, including a transmitting-receiving ultra-sound probe connected to a processing device according to the invention is characterised in that it includes at least one receiving ultra-sound probe placed near to the transmitting-receiving ultra-sound probe, at a distance not greater than the minimum width of the detection area of a single probe. The processing device is equipped with an amplifiers and comparators circuit, connected in tandem to a multiplexer circuit and a comparator circuit with a sample-and-hold circuit and with the device output.

The ultra-sound probes are preferably installed within sockets provided in a trapezoidal handle.

The mutual placement of at least two ultra-sound probes and correct processing of measurement signals received from at least two ultra-sound probes is characterised in that at least two ultra-sound probes are placed at a fixed position along an axis parallel to the direction of wave propagation, at a distance not greater than the minimum width of the detection area of a single probe, such that the surface of the generator and of the absorbing element of the ultra-sound probe are directed towards the surface of the liquid. Correct signal processing should be understood as such that the device used to process the signal selects the correct signal from at least two ultra-sound probes, corresponding to the ultra-sound signal reflected from the free surface of the liquid. This method enables recording and correct processing of the ultra-sound signal reflected from the wave profile, and eventual measurement of the wave profiles on the surface of the liquid.

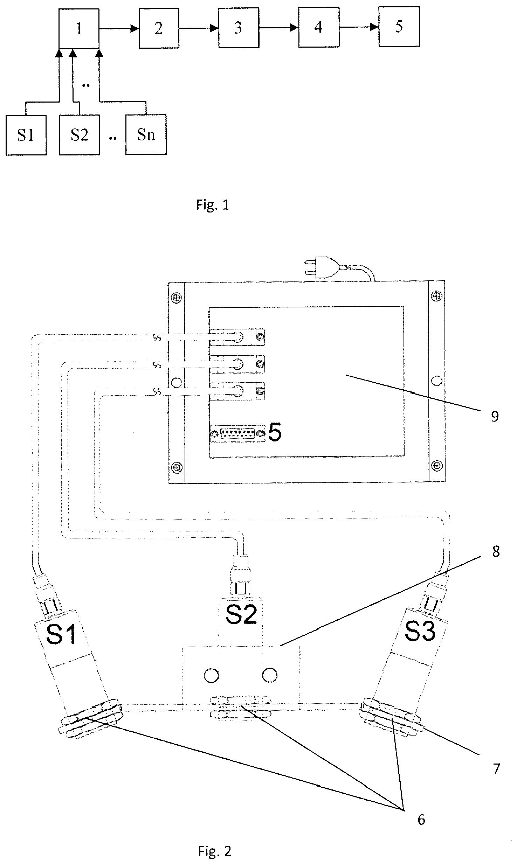

The invention is explained in detail in an embodiment presented in the drawing, in which Fig. 1 presents schematically the layout of the device and Fig. 2 presents a side view of the device with three probes.

### Example 1.

Three ultra-sound probes S1, S2, S3 with a measurement range between 20 and 70 cm are placed 45 cm above the water surface in a basin, along an axis parallel to the direction of wave propagation, at a mutual distance not greater than the minimum width of the detection area of these probes, such that their surface comprising an absorbing and a reflecting element simultaneously is directed towards the water. The probes S1, S2, S3 are configured such that the voltage signal at the output shows a negative, linear dependence on the measured distance and the sensitivity for each of the probes is S=0.2 V/cm. Voltage signals from all three ultra-sound probes are transferred to a device used to process the signal electronically, including electrical connections, amplifiers and comparators, a multiplexer and a sample-and-hold circuit. Voltage values from the three probes (S1, S2, S3) are recorded and compared in the amplifiers and comparators circuit 1, followed by rejection of signals with voltages yielding a comparison result lower by more than 0.5 V in the multiplexer circuit 2. One of the remaining signals is selected such that the signal received from the middle probe S2 receives the highest priority and signal from a terminal probe (S1, S3) receives the lowest priority. The selected signal is recorded and compared in the comparator system 3 in order to check, whether it is within the permitted value range, not smaller than 1.2 V. If the signal is within the permitted value range, it is sampled as an output signal by the sample-and-hold circuit 4. If the signal lies outside the permitted value range, the previous sample is held as the output signal. The output signal is sent to the device output 5 as electric voltage proportional to the height of the measured wave, with the profile of the voltage corresponding to the measured wave profile on the water surface. Example 2.

As shown in Fig. 2, three ultra-sound probes S1, S2, S3 are screwed into sockets 6 provided in a linear handle 7 with a trapezoidal cross-section. The transmitting-receiving ultra-sound probe S2 is located between receiving probes S1, S3. Distances between the probes are equal to the minimum width of the detection area of a single probe. Probes S1, S2, S3 are connected with a processing device, equipped with an amplifiers and comparators circuit 1, connected with a multiplexer circuit 2 and a comparator circuit 3 and with a sample-and-hold circuit 4 connected to the device output 5. A fixing plate 8 is attached to the handle 7 and used to place the device above the water surface.

## Claims

1. A method of wave profile measurement in real time on a liquid surface, particularly in a model basin, including placement of an ultra-sound probe above the surface of the liquid and a measurement of time required by the ultra-sound signal to cover the distance from the probe generator to the measurement point specified on the surface of the liquid and back to the absorbing element of the probe, followed by recording of measurement results and re-creating the wave profile in a two-dimensional space as a time profile of the distance from the measurement point determined by the probe, **characterised in that** at least two ultra-sound probes are placed along an axis parallel to the wave propagation direction, above the tested liquid surface, at a mutual distance not greater than the minimum width of the detection area of a single probe, whilst the received signal is processed in an amplifiers and comparators circuit, a multiplexer circuit and a sample-and-hold circuit, generating an output signal the voltage of which corresponds to the height of a momentary deformation of the free surface, correlating with the distance between the ultra-sound probe and the tested surface, whilst the voltage profile corresponds to the measured wave profile on the free surface of the liquid, wherein the last signal with a voltage value within the pre-set, permitted value range determined on the basis of the accepted sensitivity is used as the output signal, and the signal received from the probe, the distance of which from the measurement point on the tested liquid surface is the smallest at the time of the measurement receives the highest priority.

2. A device for measurements of wave profiles in real time on a liquid surface, in particular in a model basin, including a transmitting-receiving ultra-sound probe connected to a processing device, **characterised in that** it includes at least one receiving ultra-sound probe (S1, S3) placed near to the transmitting-receiving ultra-sound probe (S2) at a distance not greater than the minimum width of the detection area of a single probe, whilst the processing device (9) is equipped with an amplifiers and comparators circuit (1), connected in tandem to a multiplexer circuit (2), a comparator circuit (3) and a sample-and-hold circuit (4) and to the device output (5).

3. A device according to Claim 2, **characterised in that** the ultra-sound probes (S1, S2, S3) are placed in sockets (6) formed in a handle (7) with a trapezoidal cross-section.
